# EUROPEAN PATENT SPECIFICATION

(11) **EP 3 171 620 B1**
(45) Date of publication and mention of the grant of the patent: **29.07.2020**
(21) Application number: 16198975.1
(22) Date of filing: 15.11.2016
(51) Int. Cl.: H04W 76/18, H04W 8/20, H04W 48/14, H04W 48/16, H04W 60/00

(54) **METHOD AND APPARATUS FOR ESTABLISHING CONNECTION TO DATA SERVICE**
VERFAHREN UND VORRICHTUNGEN ZUM AUFBAU EINER VERBINDUNG ZU EINEM DATENDIENST
PROCÉDÉ ET APPAREILS D'ÉTABLISSEMENT D'UNE CONNEXION À UN SERVICE DE DONNÉES

(30) Priority: 17.11.2015 CN 201510792630
(43) Date of publication of application: 24.05.2017
(73) Proprietor: Xiaomi Inc., Beijing 100085 (CN)
(72) Inventor: HUANG, Jiangtao, Haidian District, Beijing 100085 (CN); KANG, Yanjun, Haidian District, Beijing 100085 (CN); DAI, Lin, Haidian District, Beijing 100085 (CN)
(74) Representative: Jeffrey, Philip Michael

(56) References cited:
- EP-A1- 1 995 986
- EP-A1- 2 549 783

## Description

### TECHNICAL FIELD

The present disclosure generally relates to the field of mobile communication technology, and more particularly, to a method and an apparatus for establishing connection to a data service.

### BACKGROUND

At present, when a mobile terminal requires a data service, the mobile terminal may initiate a request for establishing connection to the data service through a preset (previously set) Access Point Name (APN), to establish connection to the data service for the mobile terminal.

The APN is a parameter which is required to be set when the terminal is connected to a network. The APN determines in which access mode the mobile terminal accesses a Long Term Evolution (LTE) network. Different network operators practice different network standards. For example, for the China Mobile network, the operating system (e.g. the Android system) of the mobile terminal may set CMNET (a preset APN of the China Mobile network) for initiating the request for establishing connection to a data service. For the China Telecom network, the Android system may initiate the request for establishing connection to a data service through CTNET (a preset APN of the China Telecom network).

### SUMMARY

Embodiments of the present disclosure provide a method and an apparatus for establishing connection to a data service. The technical solutions are as follows.

According to a first aspect of the embodiments of the present disclosure, there is provided a method for establishing connection to a data service as claimed in claim 1.

In the above embodiment, a correct APN may be found timely and reliably for the mobile terminal and the connection to the data service may be established when the APN preset in the mobile terminal is wrong or the attach APN (i.e. the second APN) assigned by the LTE network is not consistent with the preset APN, or the mobile terminal does not set in advance a corresponding APN for the currently attached network of an operator. Therefore, the problems existing in the related art can be solved.

In one embodiment, initiating a request for connecting a data service to a LTE network with a preset first APN in the mobile terminal includes:
after the mobile terminal is attached to the LTE network, searching for the first APN preset in the mobile terminal; and
initiating a request for connecting a data service to establish connection to a data service to the LTE network with the first APN which is searched out.

In one embodiment, acquiring a second APN includes:
sending a command for searching for a second APN to a Baseband processor (BP) system of the mobile terminal; and
acquiring a second APN returned by the BP system.

In the above embodiment, by acquiring through the BP system the attach APN assigned by the LTE network attached by the mobile terminal as the second APN, the connection to the data service may be properly established for the mobile terminal when the APN preset in the mobile terminal is wrong or the attach APN (i.e. the second APN) assigned by the LTE network is not consistent with the preset APN, or the mobile terminal does not set in advance a corresponding APN for the currently attached network of an operator.

In one embodiment, sending a command for searching for a second APN to a Baseband processor (BP) system of the mobile terminal includes:
sending the command for searching for a second APN to the BP system of the mobile terminal through a Radio Interface Layer of the mobile terminal.

The above embodiment provides a practicable and flexible solution as to how to acquire the second APN.

In one embodiment, initiating a request for connecting a data service to the LTE network with the second APN includes:
acquiring an IP address assigned by the LTE network to the mobile terminal during the process of attaching to the LTE network; and
initiating the request for connecting a data service to the LTE network with the IP address and the second APN.

The above embodiment provides a practicable and flexible solution as to how to establish connection to the data service with the second APN.

In one embodiment, searching for the first APN preset in the mobile terminal includes:
according to a type of the attached LTE network, searching for a first APN which corresponds to the type of the network from preset APNs stored in the mobile terminal.

The above embodiment provides a practicable and flexible solution as to how to search for the first APN preset in the mobile terminal.

According to a second aspect of the embodiments of the present disclosure, there is provided an apparatus for establishing connection to a data service as claimed in claim 7.

In one embodiment, the first data-service connection module includes:
a searching sub-module configured to, after the mobile terminal is attached to the LTE network, search for the first APN preset in the mobile terminal;
a data-service connection sub-module configured to initiate a request for connecting a data service to establish connection to a data service to the LTE network with the first APN which is searched out by the searching sub-module; and
a receiving sub-module configured to receive a message indicating failure of establishing connection to the data service, which is fed back by the LTE network,
wherein the acquiring module is further configured to acquire the second APN when the message indicating failure of establishing connection to the data service is received.

In one embodiment, the acquiring module includes:
a sending sub-module configured to send a command for searching for a second APN to a Baseband processor (BP) system of the mobile terminal; and
a first acquiring sub-module configured to acquire a second APN returned by the BP system.

In one embodiment, the sending sub-module is configured to send the command for searching for a second APN to the BP system of the mobile terminal through a Radio Interface Layer of the mobile terminal.

In one embodiment, the second data-service connection module includes:
a second acquiring sub-module configured to acquire an IP address assigned by the LTE network to the mobile terminal during the process of attaching to the LTE network; and
a connection sub-module configured to initiate the request for connecting a data service to the LTE network with the IP address and the second APN.

In one embodiment, the searching sub-module is configured to, according to a type of the attached LTE network, search for a first APN which corresponds to the type of the network from preset APNs stored in the mobile terminal.

According to a third aspect of the embodiments of the present disclosure, there is provided an apparatus for establishing connection to a data service as claimed in claim 13.

The technical solution according to embodiments of the present disclosure may have the following beneficial effects.

In the above technical solutions, after the mobile terminal is registered to a LTE network, a preset first APN is searched out in the mobile terminal. A request for connecting a data service is initiated to the LTE network with the first APN which is searched out. If the connection to the data service fails, a second APN is acquired. That is, the second APN is an APN assigned to the mobile terminal by the LTE network when the mobile terminal is attached to the LTE network. The request for connecting a data service is initiated to the registered LTE network with the second APN, to establish connection to the data service for the mobile terminal. With the above method and apparatus for establishing connection to a data service provided in the embodiment of the present disclosure, a correct APN may be found timely and reliably for the mobile terminal and the connection to the data service may be established when the APN preset in the mobile terminal is wrong or the attach APN (i.e. the second APN) assigned by the LTE network is not consistent with the preset APN, or the mobile terminal does not set in advance a corresponding APN for the currently attached network of an operator. Therefore, the problems existing in the related art can be solved.

In a fourth aspect, there is provided a computer program which, when being executed on a processor of an apparatus for establishing connection to a data service, performs the method in the first aspect.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for establishing connection to a data service according to an exemplary embodiment;
Fig. 2 is a flow chart illustrating step S11 in a method for establishing connection to a data service according to an exemplary embodiment;
Fig. 3 is a flow chart illustrating step S11 in a method for establishing connection to a data service according to an exemplary embodiment;
Fig. 4 is a flow chart illustrating step S12 of requesting for connecting a data service to a mobile communication network according to an exemplary embodiment;
Fig. 5 is a block diagram illustrating an apparatus for establishing connection to a data service according to an exemplary embodiment;
Fig. 6 is a block diagram illustrating a first data-service connection module according to an exemplary embodiment;
Fig. 7 is a block diagram illustrating an acquiring module in an apparatus for establishing connection to a data service according to an exemplary embodiment;
Fig. 8 is a block diagram illustrating a second data-service connection module according to an exemplary embodiment; and
Fig. 9 is a block diagram illustrating an apparatus for establishing connection to a data service according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the related art, when a mobile terminal requires a data service, the operating system (e.g. the Android system) of the mobile terminal may initiate a request for establishing connection to a data service through a preset APN after the mobile terminal is properly registered in a LTE network. For example, if the mobile terminal is registered to the China Mobile network, the Android system of the mobile terminal may initiate a request for a data service with CMNET (a preset APN for the China Mobile network). If the mobile terminal is registered to the China Telecom network, the Android system may initiate a request for a data service with CTNET (a preset APN for the China Telecom network).

However, if the Android system selects a wrong APN, for example, the preset APN is wrong, the selected APN is wrong, or the preset APN does not contain APNs for all the networks and some APNs are omitted, or the APN assigned to the LTE network is not consistent with the preset APN of the mobile terminal, the APN with which the Android system of the mobile terminal sends the request is not consistent with the APN actually assigned by the communication network during registration, and thus the data service cannot be connected. For example, when the mobile terminal is installed with a Subscriber Identity Module (SIM) card of a network operator but the Android system of the mobile terminal does not set in advance the APN of the operator, the mobile terminal is unable to establish connection to a data service after the mobile terminal is registered to the LTE network of the operator. For example, for the China Telecom network, if the preset APN is CTNET, and the APN actually assigned by the network is CTLTE, the mobile terminal will be unable to establish connection to a data service.

In order to solve the above problems of being unable to establish connection to a data service, the present disclosure provides a method for establishing connection to a data service.

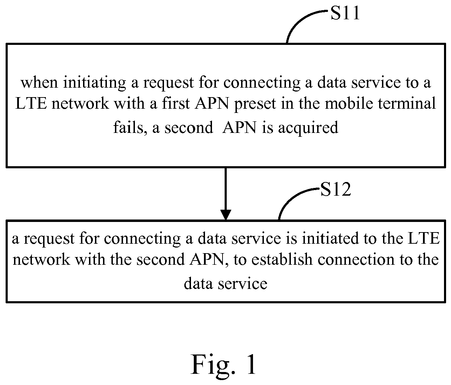

Fig. 1 is a flow chart illustrating a method for establishing connection to a data service according to an exemplary embodiment. As shown in Fig. 1, the method for establishing connection to a data service is applied in a mobile terminal, and includes the following steps S11 and S12.

At step S11, when initiating a request for connecting a data service to a LTE network with a first Access Point Name (hereinafter referred to as a first APN) preset in the mobile terminal fails, a second Access Point Name (hereinafter referred to as a second APN) is acquired, the second APN is an access point name assigned to the mobile terminal by a LTE network when the mobile terminal is attached to the LTE network.

At step S12, a request for connecting a data service is initiated to the LTE network with the second APN, to establish connection to the data service.

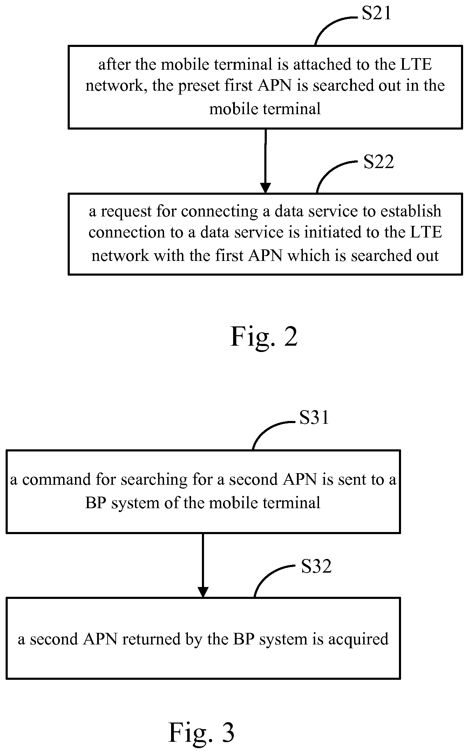

In one embodiment, at the above step S11, as shown in Fig. 2, sending a request for connecting a data service to the LTE network with the first APN preset in the mobile terminal may include the following steps.

At step S21, after the mobile terminal is attached to the LTE network, the preset first APN is searched out in the mobile terminal.

At the above step S21, the above LTE network may include various networks which may provide data services to the user, for example, LTE networks of different standards such as TDD-LTE, FDD-LTE and the like.

At step S22, a request for connecting a data service to establish connection to a data service is initiated to the LTE network with the first APN which is searched out.

Correspondingly, at step S22, when it is received a message indicating failure of establishing connection to the data service, which is fed back by the LTE network, it may be determined that initiating a request for connecting a data service to a LTE network with a first APN preset in the mobile terminal fails.

In the embodiments of the present disclosure, for the sake of easy distinguishing of the APNs, the preset APN selected by the mobile terminal is referred to as a first APN, and the APN assigned to the mobile terminal when the mobile terminal is attached to the LTE network is referred to as a second APN.

In the above embodiment of the present disclosure, when initiating a request for connecting a data service to a LTE network with a first APN preset in the mobile terminal fails, the second APN for which the mobile terminal is attached to the LTE network is acquired, and the request for connecting a data service is initiated to the attached LTE network with the second APN, to establish connection to the data service for the mobile terminal. With the above method for establishing connection to a data service provided in the embodiment of the present disclosure, a correct APN may be found timely and reliably for the mobile terminal and the connection to the data service may be established when the APN preset in the mobile terminal is wrong or the attach APN (i.e. the second APN) assigned by the LTE network is not consistent with the preset APN, or the mobile terminal does not set in advance a corresponding APN for the currently attached network of an operator. Therefore, the problems existing in the related art can be solved.

The steps will be respectively described in detail below.

At step S21, after the mobile terminal is registered to the LTE network, the preset first APN is searched out in the mobile terminal. In practice, the mobile terminal may set in advance different APNs corresponding to various networks of different operators and different standards, such as CMNET, CTNET or other preset APNs. Therefore, according to a type of the registered LTE network, the mobile terminal may search out a first APN from the stored preset APNs corresponding to the type of the network.

For example, if the mobile terminal determines that the currently registered network is a LTE network operated by the China Mobile, the mobile terminal may select a preset APN CMNET as the first APN. If the mobile terminal determines that the current network is a LTE network operated by the China Telecom network, the mobile terminal may select a preset APN CTNET as the first APN.

If the above preset APNs do not contain an APN corresponding to the currently registered network, the mobile terminal may select a default preset APN as the first APN.

In one embodiment, after a request for connecting a data service is initiated to the LTE network with the first APN searched out to establish connection to the data service, at the above step S12, the result may be either of: the data service is successfully connected with the preset first APN, or the connection to the data service with the preset first APN fails.

In case where the connection to the data service with the preset first APN fails, at the above step S11, a second APN is acquired, the second APN is an access point name assigned to the mobile terminal by a LTE network when the mobile terminal is registered to the LTE network. As shown in Fig. 3, the step may be implemented as follows.

At step S31, a command for searching for a second APN is sent to a Baseband processor (BP) system of the mobile terminal.

The second APN is the attach APN assigned to the mobile terminal by the attached LTE network.

At step S32, a second APN returned by the BP system is acquired.

The steps S21 and S22 are generally performed by the operating system (e.g. an Android system) of the mobile terminal.

Software on the mobile terminal may be generally divided into an AP (e.g. Android) system and a BP system.

The BP system handles communication with a base station, to implement a communication function (such as a voice call) of the mobile terminal. During the process of registering to a LTE network, the BP system initiates an attach process (i.e. registering process) to the LTE network. During the process, the BP system acquires a second APN (i.e. the attach APN) assigned by the attached LTE network and an IP address assigned for the mobile terminal by the attached LTE network.

The attach process of the mobile terminal with respect to the LTE network is initiated by the mobile terminal. The following is an example of an attach process of the mobile terminal.
1) The user and the LTE network perform authentication to each other, and the mobile terminal (UE, User Equipment) establishes a Mobility Management (MM) context with a Mobility Management Entity (MME);
2) The MME establishes a default carrier for the mobile terminal;
3) The UE acquires an IP address assigned by the network;
4) The UE registers the location of the user; and
5) The UE acquires an assigned temporal identification.

The above process is only an example of the attach process, and the attach (registering) process of the mobile terminal is not specifically limited in the embodiment of the present disclosure.

For the LTE network, the attach APN is generally a Gateway GPRS Support Node (GGSN) or an identification for a Packet Data Network Gateway (PGW) connected to an external network. During the above attach process, the LTE network may assign an attach APN for the mobile terminal to complete the attach process. Therefore, the BP system of the mobile terminal may know about the attach APN, i.e. the second APN.

Accordingly, the second APN may be acquired by sending to the BP system of the mobile terminal the command for searching for the attach APN of the LTE network. Moreover, since the second APN is the attach APN assigned by the LTE network to which the mobile terminal is actually attached, the APN cannot be wrong. Therefore, it can ensure that the mobile terminal may properly establish the connection to the data service.

In one embodiment, the above command for searching for the second APN (i.e. the attach APN) of the LTE network to the BP system of the mobile terminal may be implemented as follows.

The command for searching for the attach APN of the LTE network is sent to the BP system of the mobile terminal through a Radio Interface Layer (RIL) of the mobile terminal.

The RIL is an abstract layer between a telephony service and a radio hardware layer of the Android system. The command for searching for the attach APN may be sent to the BP system through a command defined by the RIL. After the BP system feeds a result back to the RIL, the RIL feeds the result back to the Android system.

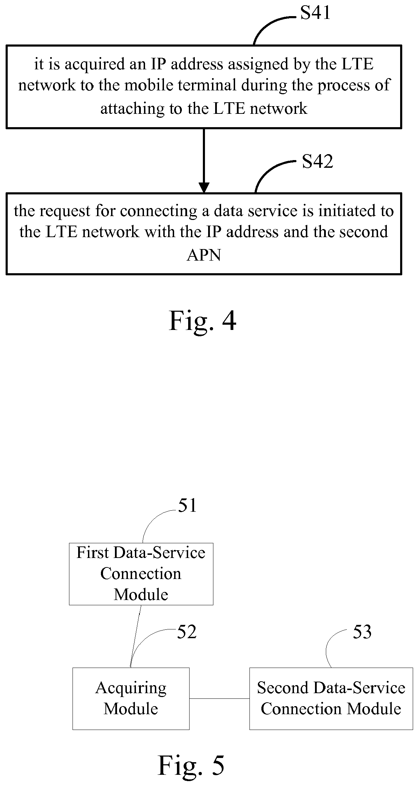

In one embodiment, as shown in Fig. 4, the step S12 of initiating a request for connecting a data service to the LTE network with the second APN may include the following steps.

At step S41, it is acquired an IP address assigned by the LTE network to the mobile terminal during the process of attaching to the LTE network.

At step S42, the request for connecting a data service is initiated to the LTE network with the IP address and the second APN.

Based on the previous process of the mobile terminal registering to the LTE network, the IP address assigned by the LTE network to the mobile terminal during the process of registering to the LTE network may be acquired. The connection to the data service of the LTE network may be properly completed with the acquired IP address and the second APN.

For example, it is assumed that the mobile terminal uses a SIM card of China Mobile. After the attach process to a TD-LTE network of the operator, the upper operating system initiates a request for connecting a data service to the TD-LTE network with an APN CTNET preset in the mobile terminal and its own IP address. The TD-LTE network feeds back a message that the establishment of the connection to the data service fails. Then, the mobile terminal sends to its BP system a command for searching for an attach APN. After the BP system returns an APN CMNET, the mobile terminal initiates again the request for connecting the data service to the TD-LTE network with its own IP address and the APN CMMET, to properly establish the connection to the data service.

The following is apparatus embodiments of the present disclosure, which may be configured to perform the above method embodiments of the present disclosure.

Fig. 5 is a block diagram illustrating an apparatus for establishing connection to a data service according to an exemplary embodiment. The apparatus may be implemented in software, hardware or combination of both, to form a part or the whole of an electronic device. As shown in Fig. 5, the apparatus for establishing connection to a data service may be applied in a mobile terminal and includes:
a first data-service connection module 51 configured to initiate a request for connecting a data service to a Long Term Evolution (LTE) network with a first Access Point Name (APN) preset in the mobile terminal;
an acquiring module 52 configured to, when the first data-service connection module 51 initiating the request for connecting a data service to the LTE network with the first APN preset in the mobile terminal fails, acquire a second APN, the second APN being an access point name assigned to the mobile terminal by the LTE network when the mobile terminal is attached to the LTE network; and
a second data-service connection module 53 configured to initiate a request for connecting a data service to the LTE network with the second APN acquired by the acquiring module 52, to establish connection to the data service.

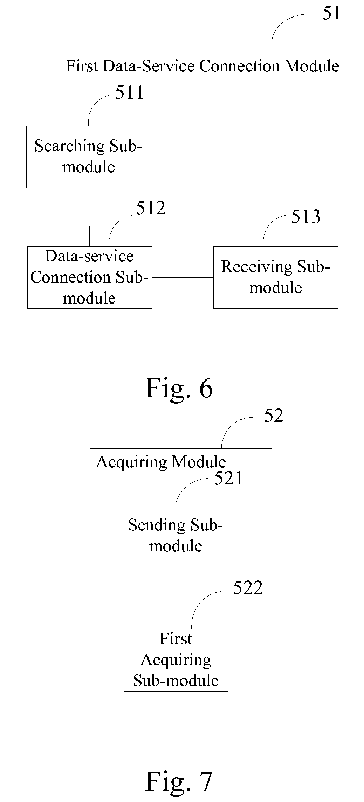

In one embodiment, as shown in Fig. 6, the first data-service connection module 51 includes: a searching sub-module 511, a data-service connection sub-module 512 and a data-service receiving sub-module 513.

The searching sub-module 511 is configured to, after the mobile terminal is attached to the LTE network, search for the first APN preset in the mobile terminal.

The data-service connection sub-module 512 is configured to initiate a request for connecting a data service to establish connection to a data service to the LTE network with the first APN which is searched out by the searching sub-module.

The receiving sub-module 513 is configured to receive a message indicating failure of establishing connection to the data service, which is fed back by the LTE network.

The acquiring module 52 is further configured to acquire the second APN when the message indicating failure of establishing connection to the data service is received.

In one embodiment, as shown in Fig. 7, the above acquiring module 52 includes:
a sending sub-module 521 configured to send a command for searching for a second APN to a Baseband processor (BP) system of the mobile terminal; and
a first acquiring sub-module 522 configured to acquire a second APN returned by the BP system.

In one embodiment, the above sending sub-module 521 is configured to send the command for searching for a second APN in the LTE network to the BP system of the mobile terminal through a Radio Interface Layer of the mobile terminal.

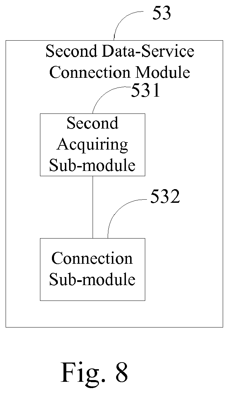

In one embodiment, as shown in Fig. 8, the second data-service connection module 53 includes:
a second acquiring sub-module 531 configured to acquire an IP address assigned by the LTE network to the mobile terminal during the process of attaching to the LTE network; and
a connection sub-module 532 configured to initiate the request for connecting a data service to the LTE network with the IP address and the second APN.

In one embodiment, the above searching sub-module 511 is configured to, according to a type of the attached LTE network, search for a first APN which corresponds to the type of the network from preset APNs stored in the mobile terminal.

According to an embodiment of the present disclosure, there is provided an apparatus for establishing connection to a data service, including:
a processor; and
a memory for storing instructions executable by the processor;
wherein the processor is configured to perform:
   when initiating a request for connecting a data service to a Long Term Evolution (LTE) network with a first Access Point Name (APN) preset in the mobile terminal fails, acquiring a second APN, the second APN being an access point name assigned to the mobile terminal by the LTE network when the mobile terminal is attached to the LTE network; and
   initiating a request for connecting a data service to the LTE network with the second APN, to establish connection to the data service.

In one embodiment, the processor may be further configured to perform: initiating a request for connecting a data service to a LTE network with a preset first APN in the mobile terminal includes:
after the mobile terminal is attached to the LTE network, searching for the first APN preset in the mobile terminal; and
initiating a request for connecting a data service to establish connection to a data service to the LTE network with the first APN which is searched out.

In one embodiment, the processor may be further configured to perform: acquiring a second APN includes:
sending a command for searching for a second APN to a Baseband processor system of the mobile terminal; and
acquiring a second APN returned by the BP system.

In one embodiment, the processor may be further configured to perform: sending a command for searching for a second APN to a Baseband processor (BP) system of the mobile terminal includes:
sending the command for searching for a second APN to the BP system of the mobile terminal through a Radio Interface Layer of the mobile terminal.

In one embodiment, the processor may be further configured to perform: sending a request for connecting a data service to the LTE network with the second APN includes:
acquiring an IP address assigned by the LTE network to the mobile terminal during the process of attaching to the LTE network; and
initiating the request for connecting a data service to the LTE network with the IP address and the second APN.

In one embodiment, the processor may be further configured to perform: searching for the first APN preset in the mobile terminal includes:
according to a type of the attached LTE network, searching for a first APN which corresponds to the type of the network from preset APNs stored in the mobile terminal.

In the apparatus for establishing connection to a data service provided by the embodiments of the present disclosure, the first data-service connection module initiates to the LTE network with the first APN preset in the mobile terminal. If the connection to the data service fails, a second APN is acquired by the acquiring module. The second APN is an APN assigned to the mobile terminal by the LTE network when the mobile terminal is attached to the LTE network. The second data-service connection module sends the request for connecting a data service to the registered LTE network with the second APN, to establish connection to the data service for the mobile terminal. With the above apparatus for establishing connection to a data service provided in the embodiment of the present disclosure, a correct APN may be found timely and reliably for the mobile terminal and the connection to the data service may be established when the APN preset in the mobile terminal is wrong or the attach APN (i.e. the second APN) assigned by the LTE network is not consistent with the preset APN, or the mobile terminal does not set in advance a corresponding APN for the currently attached network of an operator. Therefore, the problems existing in the related art can be solved.

With respect to the apparatuses in the above embodiments, the specific manners for performing operations for individual modules therein have been described in detail in the embodiments regarding the relevant methods, which will not be elaborated herein.

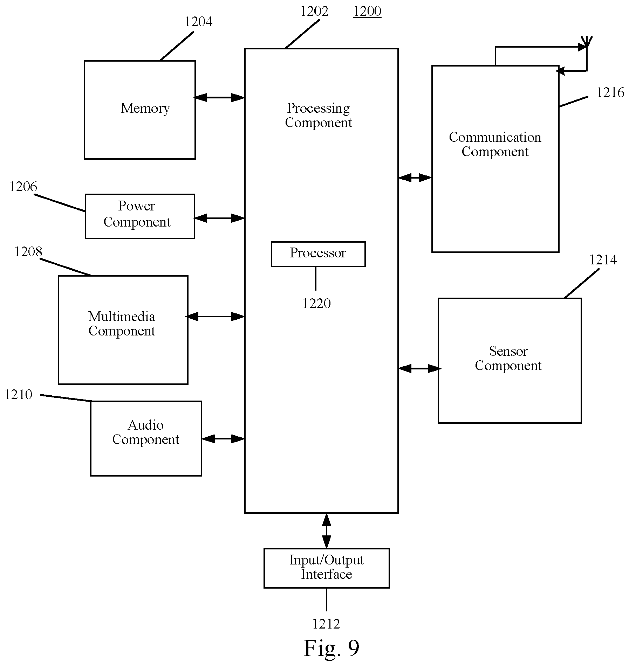

Fig. 9 is a block diagram illustrating an apparatus for establishing connection to a data service according to an exemplary embodiment, which is applied in a terminal device. For example, the apparatus 1200 may be a mobile phone, a computer, a digital broadcast terminal, a messaging device, a gaming console, a tablet, a medical device, exercise equipment, a personal digital assistant, and the like.

The apparatus 1200 can include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 can include one or more processors 1220 to execute instructions to perform all or part of the steps in the above described methods. Moreover, the processing component 1202 can include one or more modules which facilitate the interaction between the processing component 1202 and other components. For instance, the processing component 1202 can include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 can include a power management system, one or more power sources, and any other components associated with the generation, management, and distribution of power in the apparatus 1200.

The multimedia component 1208 includes a screen providing an output interface between the apparatus 1200 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 1208 includes a front camera and/or a rear camera. The front camera and the rear camera can receive an external multimedia datum while the apparatus 1200 is in an operation mode, such as a photographing mode or a video mode. Each of the front camera and the rear camera can be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal can be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons can include, but are not limited to, a home button, a volume button, a starting button, and a locking button.

The sensor component 1214 includes one or more sensors to provide status assessments of various aspects of the apparatus 1200. For instance, the sensor component 1214 can detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 can include a proximity sensor configured to detect the presence of nearby objects without any physical contact. The sensor component 1214 can also include a light sensor, such as a CMOS or CCD image sensor, for use in imaging applications. In some embodiments, the sensor component 1214 can also include an accelerometer sensor, a gyroscope sensor, a magnetic sensor, a pressure sensor, or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the apparatus 1200, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by the processor of the apparatus 1200, the apparatus 1200 is enabled to perform the method for establishing connection to a data service.

## Claims

1. A method for establishing connection to a data service, which is applied in a mobile terminal, the method comprises: after the mobile terminal is attached to a Long Term Evolution (LTE) network, when initiating a request for connecting a data service to the LTE network with a first Access Point Name (APN) preset in the mobile terminal fails, acquiring a second APN (S11), **characterised by**: the second APN being an access point name assigned to the mobile terminal by the LTE network when the mobile terminal attached to the LTE network; and
initiating a request for connecting a data service to the LTE network with the second APN, to establish connection to the data service (S12).

2. The method of claim 1, wherein initiating a request for connecting a data service to a LTE network with a preset first APN in the mobile terminal (S12) comprises:
after the mobile terminal is attached to the LTE network, searching for the first APN preset in the mobile terminal (S21); and
initiating a request for connecting a data service to establish connection to a data service to the LTE network with the first APN which is searched out (S22).

3. The method of claim 1, wherein acquiring a second APN (S11) comprises:
sending a command for searching for a second APN to a Baseband processor (BP) system of the mobile terminal (S31); and
acquiring a second APN returned by the BP system (S32).

4. The method of claim 3, wherein sending a command for searching for a second APN to a Baseband processor (BP) system of the mobile terminal (S31) comprises:
sending the command for searching for a second APN to the BP system of the mobile terminal through a Radio Interface Layer of the mobile terminal.

5. The method of claim 2, wherein searching for the first APN preset in the mobile terminal (S21) comprises:
according to a type of the attached LTE network, searching for a first APN which corresponds to the type of the network from preset APNs stored in the mobile terminal.

6. The method of any of claims 1-5, wherein initiating a request for connecting a data service to the LTE network with the second APN (S12) comprises:
acquiring an IP address assigned by the LTE network to the mobile terminal during the process of attaching to the LTE network (S41); and
initiating the request for connecting a data service to the LTE network with the IP address and the second APN (S42).

7. An apparatus for establishing connection to a data service, which is applied in a mobile terminal, the apparatus comprises:
a first data-service connection module (51) configured to initiate a request for connecting a data service to a Long Term Evolution (LTE) network with a first Access Point Name (APN) preset in the mobile terminal after the mobile terminal is attached to the LTE network;
an acquiring module (52) configured to, when the first data-service connection module (51) initiating the request for connecting a data service to the LTE network with the first APN preset in the mobile terminal fails, acquire a second APN, **characterised by**: the second APN being an access point name assigned to the mobile terminal by the LTE network when the mobile terminal attached to the LTE network; and
a second data-service connection module (53) configured to initiate a request for connecting a data service to the LTE network with the second APN, to establish connection to the data service.

8. The apparatus of claim 7, wherein the first data-service connection module (51) comprises:
a searching sub-module (511) configured to, after the mobile terminal is attached to the LTE network, search for the first APN preset in the mobile terminal;
a data-service connection sub-module (512) configured to initiate a request for connecting a data service to establish connection to a data service to the LTE network with the first APN which is searched out by the searching sub-module; and
a receiving sub-module (513) configured to receive a message indicating failure of establishing connection to the data service, which is fed back by the LTE network,
wherein the acquiring module is further configured to acquire the second APN when the message indicating failure of establishing connection to the data service is received.

9. The apparatus of claim 7, wherein the acquiring module (52) comprises:
a sending sub-module (521) configured to send a command for searching for a second APN to a Baseband processor (BP) system of the mobile terminal; and
a first acquiring sub-module (522) configured to acquire a second APN returned by the BP system.

10. The apparatus of claim 9, wherein
the sending sub-module (521) is configured to send the command for searching for a second APN to the BP system of the mobile terminal through a Radio Interface Layer of the mobile terminal.

11. The apparatus of claim 8, wherein
the searching sub-module (511) is configured to, according to a type of the attached LTE network, search for a first APN which corresponds to the type of the network from preset APNs stored in the mobile terminal.

12. The apparatus of any of claims 7-11, wherein the second data-service connection module (53) comprises:
a second acquiring sub-module (531) configured to acquire an IP address assigned by the LTE network to the mobile terminal during the process of attaching to the LTE network; and
a connection sub-module (532) configured to initiate the request for connecting a data service to the LTE network with the IP address and the second APN.

13. An apparatus (1200) for establishing connection to a data service, which is applied in a mobile terminal, wherein the apparatus (1200) comprises:
a processor (1220); and
a memory (1204) for storing instructions executable by the processor (1220); the processor (1220) is configured to perform: after the mobile terminal is attached to a Long Term Evolution (LTE) network, when initiating a request for connecting a data service to the LTE network with a first Access Point Name (APN) preset in the mobile terminal fails, acquiring a second APN, **characterised by**: the second APN being an access point name assigned to the mobile terminal by the LTE network when the mobile terminal attached to the LTE network; and initiating a request for connecting a data service to the LTE network with the second APN, to establish connection to the data service.

14. A computer program which, when being executed on a processor (1220) of an apparatus (1200) for establishing connection to a data service, performs the method of any of claims 1-6.

## Patentansprüche

1. Verfahren zum Herstellen einer Verbindung zu einem Datendienst, welches in einem mobilen Endgerät angewendet wird, wobei das Verfahren umfasst:
nachdem ein mobiles Endgerät an ein LTE (Long Term Evolution)-Netzwerk angeschlossen wurde, wenn Initiieren einer Anfrage zum Verbinden eines Datendienstes mit dem LTE-Netzwerk mit einem ersten Zugangspunktnamen (APN), welcher in dem mobilen Endgerät voreingestellt ist, fehlschlägt, Erfassen eines zweiten APN (S11), **dadurch gekennzeichnet dass**:
der zweite APN ein Zugangspunktname ist, welcher dem mobilen Endgerät durch das LTE-Netzwerk zugewiesen wird, wenn das mobile Endgerät an das LTE-Netzwerk angeschlossen ist; und
Initiieren einer Anfrage zum Verbinden eines Datendienstes mit dem LTE-Netzwerk mit dem zweiten APN, um eine Verbindung mit dem Datendienst herzustellen (S12).

2. Verfahren nach Anspruch 1, wobei Initiieren einer Anfrage zum Verbinden eines Datendienstes mit einem LTE-Netzwerk mit einem voreingestellten ersten APN in dem mobilen Endgerät (S12) umfasst:
nachdem das mobile Endgerät an das LTE-Netzwerk angeschlossen ist, Suchen des ersten APN, welcher in dem mobilen Endgerät voreingestellt ist (S21); und
Initiieren einer Anfrage zum Verbinden eines Datendienstes, um eine Verbindung zu einem Datendienst zu dem LTE-Netzwerk mit dem ersten APN, welcher ausfindig gemacht ist, herzustellen (S22).

3. Verfahren nach Anspruch 1, wobei Erfassen eines zweiten APN (S11) umfasst:
Senden eines Befehls zum Suchen eines zweiten APN an ein Basisbandprozessor (BP)-System des mobilen Endgeräts (S31); und
Erfassen eines zweiten APN, welcher von dem BP-System zurückgegeben wurde (S32).

4. Verfahren nach Anspruch 3, wobei Senden eines Befehls zum Suchen eines zweiten APN an ein Basisbandprozessor (BP)-System des mobilen Endgeräts (S31) umfasst:
Senden des Befehl zum Suchen eines zweiten APN an das BP-System des mobilen Endgeräts durch eine Funkschnittstellenschicht des mobilen Endgeräts.

5. Verfahren nach Anspruch 2, wobei Suchen des ersten APN, welcher in dem mobilen Endgerät voreingestellt ist (S21), umfasst:
gemäß einem Typ des angeschlossenen LTE-Netzwerks, Suchen eines ersten APN, welcher dem Typ des Netzwerks entspricht, in voreingestellten APNs, welche in dem mobilen Endgerät gespeichert sind.

6. Verfahren nach einem der Ansprüche 1-5, wobei Initiieren einer Anfrage zum Verbinden eines Datendienstes mit einem LTE-Netzwerk mit dem zweiten APN (S12) umfasst:
Erfassen einer IP-Adresse, welche dem mobilen Endgerät durch das LTE-Netzwerk während des Prozesses des Anschließens an das LTE-Netzwerk zugewiesen wurde (S41); und
Initiieren der Anfrage zum Verbinden eines Datendienstes mit dem LTE-Netzwerk mit der IP-Adresse und dem zweiten APN (S42).

7. Einrichtung zum Herstellen einer Verbindung zu einem Datendienst, welche in einem mobilen Endgerät angewendet wird, wobei die Einrichtung umfasst:
eine erstes Datendienstverbindungsmodul (51), welches konfiguriert ist, um eine Anfrage zum Verbinden eines Datendienstes mit einem LTE (Long Term Evolution)-Netzwerk mit einem ersten Zugangspunktnamen (APN), welcher in dem mobilen Endgerät voreingestellt ist, zu initiieren, nachdem das mobile Endgerät an das LTE-Netzwerk angeschlossen ist;
ein Erfassungsmodul (52), welches konfiguriert ist, wenn das Initiieren der Anfrage zum Verbinden eines Datendienstes mit dem LTE-Netzwerk mit dem ersten APN, welcher in dem mobilen Endgerät voreingestellt ist, durch das erste Datendienstverbindungsmodul (51) fehlschlägt, einen zweiten APN zu erfassen,
**dadurch gekennzeichnet, dass**:
der zweite APN ein Zugangspunktname ist, welcher dem mobilen Endgerät durch das LTE-Netzwerk zugewiesen wird, wenn das mobile Endgerät an das LTE-Netzwerk angeschlossen ist; und
ein zweites Datendienstverbindungsmodul (53), welches konfiguriert ist, eine Anfrage zum Verbinden eines Datendienstes mit dem LTE-Netzwerk mit dem zweiten APN zu initiieren, um eine Verbindung mit dem Datendienst herzustellen.

8. Einrichtung nach Anspruch 7, wobei das erste Datendienstverbindungsmodul (51) umfasst:
ein Suchteilmodul (511), welches konfiguriert ist, nachdem das mobile Endgerät an das LTE-Netzwerk angeschlossen ist, den ersten APN zu suchen, welcher in dem mobilen Endgerät voreingestellt ist;
ein Datendienstverbindungsteilmodul (512), welches konfiguriert ist, eine Anfrage zum Verbinden eines Datendienstes zu initiieren, um eine Verbindung zu einem Datendienst zu dem LTE-Netzwerk mit dem ersten APN, welcher durch das Suchteilmodul ausfindig gemacht wird, herzustellen; und
eine Empfangsteilmodul (513), welches konfiguriert ist, um eine Nachricht zu empfangen, welche auf einen Fehlschlag einer Verbindungsherstellung zu dem Datendienst hinweist, welche durch das LTE-Netzwerk zurückgespeist wird, wobei das Erfassungsmodul weiter konfiguriert ist, den zweiten APN zu erfassen, wenn die Nachricht, welche auf einen Fehlschlag einer Verbindungsherstellung zu dem Datendienst hinweist, empfangen wird.

9. Einrichtung nach Anspruch 7, wobei das Erfassungsmodul (52) umfasst:
ein Sendeteilmodul (521), welches konfiguriert ist, einen Befehl zum Suchen eines zweiten APN an ein Basisbandprozessor (BP)-System des mobilen Endgeräts zu senden; und
ein erstes Erfassungsteilmodul (522), welches konfiguriert ist, einen zweiten APN zu erfassen, welcher durch das BP-System zurückgegeben wurde.

10. Einrichtung nach Anspruch 9, wobei
das Sendeteilmodul (521) konfiguriert ist, den Befehl zum Suchen eines zweiten APN an das BP-System des mobilen Endgeräts durch eine Funkschnittstellenschicht des mobilen Endgeräts zu senden.

11. Einrichtung nach Anspruch 8, wobei
das Suchteilmodul (511) konfiguriert ist, gemäß einem Typ des angeschlossenen LTE-Netzwerks einen ersten APN, welcher dem Typ des Netzwerk entspricht, in voreingestellten APNs zu suchen, welche in dem mobilen Endgerät gespeichert sind.

12. Einrichtung nach einem der Ansprüche 7-11, wobei das zweite Datendienstverbindungsmodul (53) umfasst:
ein zweites Erfassungsteilmodul (531), welches konfiguriert ist, eine IP-Adresse zu erfassen, welche dem mobilen Endgerät durch das LTE-Netzwerk während des Prozesses des Anschließens an das LTE-Netzwerk zugewiesen wurde; und
ein Verbindungsteilmodul (532), welches konfiguriert ist, die Anfrage zum Verbinden eines Datendienstes mit dem LTE-Netzwerk mit der IP-Adresse und dem zweiten APN zu initiieren.

13. Einrichtung (1200) zum Herstellen einer Verbindung zu einem Datendienst, welche in einem mobilen Endgerät angewendet wird, wobei die Einrichtung (1200) umfasst:
einen Prozessor (1220); und
einen Speicher (1204) zum Speichern von Anweisungen, welche durch den Prozessor (1220) ausführbar sind;
wobei der Prozessor (1220) konfiguriert ist, folgendes auszuführen:
nachdem das mobile Endgerät an ein LTE (Long Term Evolution)-Netzwerk angeschlossen wurde, wenn Initiieren einer Anfrage zum Verbinden eines Datendienstes mit dem LTE-Netzwerk mit einem ersten Zugangspunktnamen (APN), welcher in dem mobilen Endgerät voreingestellt ist, fehlschlägt, Erfassen eines zweiten APN, **dadurch gekennzeichnet dass**:
der zweite APN ein Zugangspunktname ist, welcher dem mobilen Endgerät durch das LTE-Netzwerk zugewiesen wird, wenn das mobile Endgerät an das LTE-Netzwerk angeschlossen ist; und
Initiieren einer Anfrage zum Verbinden eines Datendienstes mit dem LTE-Netzwerk mit dem zweiten APN, um eine Verbindung mit dem Datendienst herzustellen.

14. Computerprogramm, welches, wenn es in einem Prozessor (1220) einer Einrichtung (1200) zum Herstellen einer Verbindung zu einem Datendienst ausgeführt wird, das Verfahren nach einem der Ansprüche 1-6 ausführt.

## Revendications

1. Procédé d'établissement d'une connexion à un service de données, qui est appliqué dans un terminal mobile, le procédé comprend :
après que le terminal mobile est rattaché à un réseau d'évolution à long terme (LTE), quand le lancement d'une demande pour connecter un service de données au réseau LTE avec un premier nom de point d'accès (APN) prédéfini dans le terminal mobile échoue, l'acquisition d'un second APN (S11), **caractérisé par** :
le second APN qui est un nom de point d'accès attribué au terminal mobile par le réseau LTE quand le terminal mobile s'est rattaché au réseau LTE ; et
le lancement d'une demande pour connecter un service de données au réseau LTE avec le second APN, pour établir une connexion au service de données (S12).

2. Procédé selon la revendication 1, dans lequel le lancement d'une demande pour connecter un service de données à un réseau LTE avec un premier APN prédéfini dans le terminal mobile (S12) comprend :
après que le terminal mobile est rattaché au réseau LTE, la recherche du premier APN prédéfini dans le terminal mobile (S21) ; et
le lancement d'une demande pour connecter un service de données pour établir une connexion à un service de données au réseau LTE avec le premier APN qui est recherché (S22).

3. Procédé selon la revendication 1, dans lequel l'acquisition d'un second APN (SU) comprend :
l'envoi d'une commande pour la recherche d'un second APN à un système de processeur de bande de base (BP) du terminal mobile (S31) ; et
l'acquisition d'un second APN renvoyé par le système BP (S32).

4. Procédé selon la revendication 3, dans lequel l'envoi d'une commande pour la recherche d'un second APN à un système de processeur de bande de base (BP) du terminal mobile (S31) comprend :
l'envoi de la commande pour la recherche d'un second APN au système BP du terminal mobile à travers une couche d'interface radio du terminal mobile.

5. Procédé selon la revendication 2, dans lequel la recherche du premier APN prédéfini dans le terminal mobile (S21) comprend :
en fonction d'un type du réseau LTE rattaché, la recherche d'un premier APN qui correspond au type du réseau parmi des APN prédéfinis stockés dans le terminal mobile.

6. Procédé selon l'une quelconque des revendications 1 à 5, dans lequel le lancement d'une demande pour connecter un service de données au réseau LTE avec le second APN (S12) comprend :
l'acquisition d'une adresse IP attribuée par le réseau LTE au terminal mobile durant le processus de rattachement au réseau LTE (S41) ; et
le lancement de la demande pour connecter un service de données au réseau LTE avec l'adresse IP et le second APN (S42).

7. Appareil d'établissement d'une connexion à un service de données, qui est appliqué dans un terminal mobile, l'appareil comprend :
un premier module de connexion de service de données (51) configuré pour lancer une demande pour connecter un service de données à un réseau d'évolution à long terme (LTE) avec un premier nom de point d'accès (APN) prédéfini dans le terminal mobile après que le terminal mobile est rattaché au réseau LTE ;
un module d'acquisition (52) configuré pour, quand le premier module de connexion de service de données (51) lançant la demande pour connecter un service de données au réseau LTE avec le premier APN prédéfini dans le terminal mobile échoue, acquérir un second APN, **caractérisé par** :
le second APN qui est un nom de point d'accès attribué au terminal mobile par le réseau LTE quand le terminal mobile s'est rattaché au réseau LTE ; et
un second module de connexion de service de données (53) configuré pour lancer une demande pour connecter un service de données au réseau LTE avec le second APN, pour établir une connexion au service de données.

8. Appareil selon la revendication 7, dans lequel le premier module de connexion de service de données (51) comprend :
un sous-module de recherche (511) configuré pour, après que le terminal mobile est rattaché au réseau LTE, rechercher le premier APN prédéfini dans le terminal mobile ;
un sous-module de connexion de service de données (512) configuré pour lancer une demande pour connecter un service de données pour établir une connexion à un service de données au réseau LTE avec le premier APN qui est recherché par le sous-module de recherche ; et
un sous-module de réception (513) configuré pour recevoir un message indiquant un échec d'établissement d'une connexion au service de données, qui est retourné par le réseau LTE, dans lequel le module d'acquisition est configuré en outre pour acquérir le second APN quand le message indiquant un échec d'établissement d'une connexion au service de données est reçu.

9. Appareil selon la revendication 7, dans lequel le module d'acquisition (52) comprend :
un sous-module d'envoi (521) configuré pour envoyer une commande pour la recherche d'un second APN à un système de processeur de bande de base (BP) du terminal mobile ; et
un premier sous-module d'acquisition (522) configuré pour acquérir un second APN renvoyé par le système BP.

10. Appareil selon la revendication 9, dans lequel
le sous-module d'envoi (521) est configuré pour envoyer la commande pour la recherche d'un second APN au système BP du terminal mobile à travers une couche d'interface radio du terminal mobile.

11. Appareil selon la revendication 8, dans lequel
le sous-module de recherche (511) est configuré pour, en fonction d'un type du réseau LTE rattaché, rechercher un premier APN qui correspond au type du réseau parmi des APN prédéfinis stockés dans le terminal mobile.

12. Appareil selon l'une quelconque des revendications 7 à 11, dans lequel le second module de connexion de service de données (53) comprend :
un second sous-module d'acquisition (531) configuré pour acquérir une adresse IP attribuée par le réseau LTE au terminal mobile durant le processus de rattachement au réseau LTE ; et
un sous-module de connexion (532) configuré pour lancer la demande pour connecter un service de données au réseau LTE avec l'adresse IP et le second APN.

13. Appareil (1200) d'établissement d'une connexion à un service de données, qui est appliqué dans un terminal mobile, dans lequel l'appareil (1200) comprend :
un processeur (1220) ; et
une mémoire (1204) pour stocker des instructions exécutables par le processeur(1220) ;
le processeur (1220) est configuré pour effectuer :
après que le terminal mobile est rattaché à un réseau d'évolution à long terme (LTE), quand le lancement d'une demande pour connecter un service de données au réseau LTE avec un premier nom de point d'accès (APN) prédéfini dans le terminal mobile échoue, l'acquisition d'un second APN, **caractérisé par** :
le second APN qui est un nom de point d'accès attribué au terminal mobile par le réseau LTE quand le terminal mobile s'est rattaché au réseau LTE ; et
le lancement d'une demande pour connecter un service de données au réseau LTE avec le second APN, pour établir une connexion au service de données.

14. Programme informatique qui, quand il est exécuté sur un processeur (1220) d'un appareil (1200) d'établissement d'une connexion à un service de données, effectue le procédé selon l'une quelconque des revendications 1 à 6.
